# EUROPEAN PATENT SPECIFICATION

(11) **EP 3 950 173 B1**
(45) Date of publication and mention of the grant of the patent: **05.04.2023**
(21) Application number: 20779826.5
(22) Date of filing: 11.03.2020
(51) Int. Cl.: B22D 11/108, C22B 9/18, B22D 11/111, B22D 11/116, C21C 7/064, C22B 9/10, B23K 35/36

(54) **FLUX CONFIGURED TO BE USED IN ELECTROSLAG REMELTING METHOD, AND FLUX PRODUCTION METHOD**
FLUSSMITTEL, DAS ZUR VERWENDUNG IM ELEKTROSCHLACKE-UMSCHMELZVERFAHREN KONFIGURIERT IST, UND FLUSSMITTELHERSTELLUNGSVERFAHREN
FLUX CONFIGURÉ POUR ÊTRE UTILISÉ DANS UN PROCÉDÉ DE REFUSION SOUS LAITIER ÉLECTROCONDUCTEUR, ET PROCÉDÉ DE PRODUCTION DE FLUX

(30) Priority: 26.03.2019 JP 2019058332
(43) Date of publication of application: 09.02.2022
(73) Proprietor: Denka Company Limited, Tokyo 103-8338 (JP)
(72) Inventor: HIRATA, Satoshi, Tokyo 103-8338 (JP); KOYAMA, Atsunori, Tokyo 103-8338 (JP); TANAKA, Takaaki, Tokyo 103-8338 (JP)
(74) Representative: Gulde & Partner
(86) International application number: PCT/JP2020/010554
(87) International publication number: WO 2020/195838

(56) References cited:
- CN-A- 106 756 078
- CN-A- 107 312 937
- CN-B- 107 488 788
- JP-A- 2012 241 230
- JP-A- 2013 049 908
- US-A- 4 359 337
- US-A- 4 450 007
- YANWU DONG ET AL: "Dissolution Behavior of Alumina-Based Inclusions in CaF2-Al2O3-CaO-MgO-SiO2 Slag Used for the Electroslag Metallurgy Process", METALS, vol. 6, no. 11, 9 November 2016 (2016-11-09), page 273, XP055742944, DOI: 10.3390/met6110273
- DONG, YANWU et al.: "Dissolution Behavior of Alumina-Based Inclusions in CaF2-A1203-Ca0-Mg0=Si02 Slag Used for the Electroslag Metallurgy Process", Metals, vol. 6, no. 11, 9 November 2016 (2016-11-09), page 273, XP55742944,

## Description

### TECHNICAL FIELD

The present invention relates to a flux configured to be used in an electro-slag remelting method, a and a method for producing the flux.

### BACKGROUND ART

An electro-slag remelting method is a kind of a special melting method for producing a high-purity metal by remelting and smelting a metal material (for example, a steel material). This method is also referred to as an "ESR method" by taking the acronym of Electro-Slag Remelting process in English (hereinafter, this expression is also used in the present specification).

In the ESR method, a metal material is highly purified by a flow in which (1) first, an electrode metal is melted by joule heating of a slag, (2) impurities (sulfur, oxygen, and the like) are removed when molten metal droplets thereof pass through a slag pool, and (3) the molten metal solidifies at a bottom of a furnace.

As the slag in the ESR method, a slag containing CaF₂ or Al₂O₃ as a main component is often used. That is, a solid flux containing CaF₂ or Al₂O₃ as a main component is melted at a high temperature to form the slag, which is often performed.

As an example, Patent Document 1 describes a slag for an electro-slag remelting method having an analytical composition of 0.2% to 15% by weight of SiO₂, 12% to 40% by weight of Al₂O₃, 15% to 40% by weight of an alkaline earth metal oxide, 12% to 75% by weight of CaF₂, 0.5% by weight or less of FeO, 1% by weight or less of MnO, and 10% by weight or less of TiO₂. In addition, a method for producing the same is described.

As another example, Patent Document 2 discloses an electro-slag remelting method in which a composition of a flux to be added is set to satisfy 20 to 60 mass% of CaO, 10 to 40 mass% of Al₂O₃, 20 to 60 mass% of CaF₂, 1 to 10 mass% of an iron oxide, and CaO/Al₂O₃ of 1.0 to 6.0.

Further flux compositions are described in Patent Documents 3, 4, 5 and 6 as well as in Non-Patent Document 1.

### RELATED DOCUMENTS

### PATENT AND NON-PATENT DOCUMENTs

[Patent Document 1] Japanese Examined Patent Publication No. 57-060411
[Patent Document 2] Japanese Unexamined Patent Publication No. 2013-049908
[Patent Document 3] US 4 359 337 A
[Patent Document 4] CN 107 488 788 B
[Patent Document 5] CN 107 312 937 A
[Patent Document 6] US 4 450 007 A
[Non-Patent Document 1] Yanwu Dong et al.: Metals, Vol. 6, no. 11, 2016, page 273, XP055742944.

When performing an ESR method, it is preferable that a flux to be used is melted at a relatively low melting point to form a molten slag. When the flux has a low melting point, there is an advantage such as a reduction of an energy cost or a reduction of an unmelted flux.

The present inventors considered that there is a still room for improvement in lowering a melting point of a flux, more specifically, a flux containing CaF₂ or Al₂O₃ as a main component. That is, the present inventors have conducted various studies for the purpose of providing a flux for an ESR, which has a low melting point and is easy to melt.

### SOLUTION TO PROBLEM

As a result of intensive studies, the present inventors have completed the invention to be provided below and solved the above problem.

The scope of the present invention is defined by independent claims 1 and 2, and further embodiment of the invention is specified in dependent claim 3.

### ADVANTAGEOUS EFFECTS OF THE INVENTION

According to the present invention, there is provided a flux for ESR which has a low melting point and is easy to melt.

When performing an ESR method using the flux for ESR, an advantage such as reduction of an energy cost and a reduction of an unmelted flux can be obtained.

### BRIEF DESCRIPTION OF THE DRAWINGS

Fig. 1 shows a schematic view for explaining a method for producing a high-purity steel by an electro-slag remelting method.
Fig. 2 shows a schematic view for explaining a method for producing a high-purity steel by an electro-slag remelting method.
Fig. 3 shows a chart obtained by XRD measuring a flux of Examples.

### DESCRIPTION OF THE EMBODIMENTS

Hereinafter, embodiments of the present invention will be described in detail with reference to the drawings.

In the drawings, similar components are designated by the same reference numerals, and the description thereof will not be repeated.

The drawings are for explanation purposes only. A shape or a dimensional ratio of each member in the drawing does not necessarily correspond to an actual article.

In the present specification, the term "slag" basically refers to a state in which a flux that is a solid at a room temperature (23°C) is heated and melted at a high temperature. However, depending on the context, it is not limited thereto (for example, in Patent Document 1, a flux that is solid at a room temperature seems to be expressed as a "slag").

### <Flux and method for producing same>

A flux of the present embodiment is used in an electro-slag remelting method.

The flux of the present embodiment includes a CaF₂ crystal phase, an Al₂O₃ crystal phase, and a CaO·6Al₂O₃ crystal phase. A content proportion of the CaO·6Al₂O₃ crystal phase in an entirety of the crystal phases in the flux is equal to or more than 10% by mass and equal to or less than 30% by mass.

Although a detailed mechanism is unknown, a melting point of Al₂O₃ among CaF₂ and Al₂O₃, which are the main crystal phases of a pre-melt flux for an ESR method is 2072°C (literature value), which is very high.

On the other hand, the melting point of CaO·6Al₂O₃ is about 1850°C (literature value), which is lower than the melting point of Al₂O₃.

The CaO·6Al₂O₃ contains 6 mol of Al₂O₃ with respect to 1 mol of CaO, as can be seen from a composition formula thereof. From above, it is presumed that CaO·6Al₂O₃ has physical/chemical properties close to those of Al₂O₃.

That is, it is presumed that the flux of the present embodiment contains an appropriate amount of CaO·6Al₂O₃ "which is considered to have properties close to Al₂O₃ but has a melting point lower than Al₂O₃", thus has a low melting point as an entirety of the flux, while having properties required as a flux used in the ESR method.

A content proportion of each crystal phase of CaF₂, Al₂O₃, and CaO·6Al₂O₃ can be quantitatively analyzed by, for example, analyzing a powder X-ray diffraction (XRD) pattern by a Rietveld method.

More specifically, each content proportion can be determined through a method of comparing a diffraction intensity-incident angle chart obtained by the XRD analysis with an XRD pattern simulated from a crystal structure model, and optimizing a mass fraction by the least squares method so that residuals of an experimental XRD pattern and a calculated XRD pattern is minimized.

As described above, the content proportion of the CaO·6Al₂O₃ crystal phase in an entirety of the crystal phases in the flux of the present embodiment is equal to or more than 10% by mass and equal to or less than 30% by mass in the entirety of the flux. This content proportion is preferably equal to or more than 12% by mass and equal to or less than 25% by mass, and more preferably equal to or more than 14% by mass and equal to or less than 20% by mass.

The content proportion of the CaF₂ crystal phase in the flux of the present invention is equal to or more than 60% by mass and equal to or less than 80% by mass, and more preferably equal to or more than 65% by mass and equal to or less than 75% by mass, in the entirety of the crystal phases in the flux.

The content proportion of the Al₂O₃ crystal phase in the flux of the present invention is equal to or more than 5% by mass and equal to or less than 15% by mass, and more preferably equal to or more than 7% by mass and equal to or less than 13% by mass, in the entirety of the crystal phases in the flux.

It is easy to design the melting point of the flux to be lower by appropriately adjusting each content proportion of the CaF₂ crystal phase, the Al₂O₃ crystal phase, and CaO·6Al₂O₃ crystal phase, and/or a content of CaF₂ or Al₂O₃ as a chemical component. Also, a viscosity, an electric resistance, and the like become appropriate values by performing the ESR method using the flux having such a composition, and as a result, it becomes easy to smelt a metal material with higher purity.

Furthermore, the flux of the invention contains CaO, MgO and SiO₂.

The content proportion of the CaO component in the flux of the invention is equal to or more than 0.1% by mass and equal to or less than 7% by mass, and more preferably equal to or more than 0.1% by mass and equal to or less than 5% by mass, in the entirety of the flux. The CaO component here includes both CaO in the CaO·6Al₂O₃ crystal phase described above and other CaO.

It is considered that when the flux contains an appropriate amount of the CaO component, a basicity of the slag obtained by melting the flux can be appropriately increased while keeping the melting point of the flux low. This is preferable from the viewpoint of a removal performance of a sulfur component.

The content proportion of MgO in the flux of the invention is equal to or more than 0.005% by mass and equal to or less than 0.5% by mass, and preferably equal to or more than 0.01% by mass and equal to or less than 0.03% by mass, in the entirety of the flux.

When the flux contains an appropriate amount of MgO, the same effect as that of the CaO component tends to be obtained.

The flux of the present invention further contains SiO₂, wherein the content proportion thereof is equal to or more than 0.3% by mass and equal to or less than 1.5% by mass, and preferably equal to or more than 0.5% by mass and equal to or less than 1.0% by mass, in the entirety of the flux.

When the flux contains an appropriate amount of SiO₂, it becomes easy to design to increase an electric resistance of the slag obtained by melting the flux while keeping a performance such as a removability of a sulfur component. This is preferable in that an electrode metal can be easily melted. In addition, when the flux contains an appropriate amount of SiO₂, a ferrite phase of a steel tends to be strengthened and a strength of a steel after refining tends to increase.

The amount of each of the components can be quantified by a fluorescent X-ray elemental analysis method (X-ray Fluorescence Analysis, XRF), an ion electrode method, a combination of thereof, and the like.

Basically, it is preferable that the flux of the present embodiment contains as little component as possible other than the above. That is, it is preferable that the amount of impurities contained in the flux of the present embodiment is as small as possible. When the amount of components other than the above is small, a fluctuation in the properties of the slag obtained by melting the flux can be suppressed.

Specifically, the content proportion of the impurities is preferably equal to or less than 5% by mass, more preferably equal to or less than 3% by mass, and further preferably equal to or less than 1% by mass in the entirety of the flux.

The properties of the flux of the present embodiment can vary.

As an aspect, the flux of the present embodiment can be produced by mixing particles of each of the above components. For example, the flux can be obtained by (1) first, preparing a raw material for each of the main minerals CaF₂, Al₂O₃, and CaO·6Al₂O₃, (2) separately melting, cooling, pulverizing each raw material and sieving the raw material as needed, and (3) blending the obtained pulverized product in an appropriate ratio.

Furthermore, the flux of the present invention contains a molten mixture at least containing a compound containing CaF₂ and a compound containing Al₂O₃. Specifically, the flux of the present embodiment preferably contains the molten mixture of CaF₂ and Al₂O₃ in which CaF₂ and Al₂O₃ are not present as "separate particles" as described above, but CaF₂ and Al₂O₃ are melted together to form a mixture.

The compound containing CaF₂ can be a compound containing the CaF₂ crystal phase.

The compound containing Al₂O₃ can be a compound containing an Al₂O₃ crystal phase.

The flux at least containing a molten mixture of the compound containing CaF₂ and the compound containing Al₂O₃ can be produced by (1) mixing the compound containing CaF₂ and the compound containing Al₂O₃ (in some cases, other trace components) of raw materials while melting together to form a melt and (2) cooling and pulverizing the melt, and sieving the melt as needed.

Here, a temperature at the time of the melt mixing is preferably equal to or higher than 1600°C.

As the findings of the present inventors, water vapor in an atmosphere reacts with a part of CaF₂ and Al₂O₃ to form the CaO·6Al₂O₃ by setting a condition at the time of (1) appropriately, in particular, setting the temperature to be equal to or higher than 1600°C.

More specific methods, conditions, and the like for obtaining the melt will be described again in Examples to be described later.

<Method for producing high-purity steel>

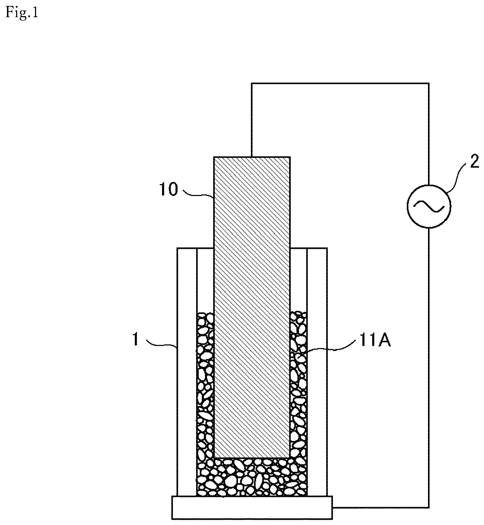

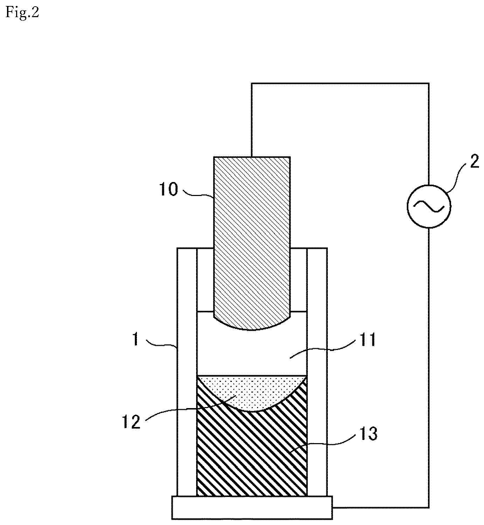

Figs. 1 and 2 are schematic views for explaining an example of a method for refining a raw material steel using an ESR method to produce a high-purity steel. Specifically, Fig. 1 is a view schematically showing a state at a start of production of high-purity steel using the ESR method, and Fig. 2 is a diagram schematically showing a state after a while from the start of Fig. 1.

In Fig. 1, a raw material steel (an electrode 10) is electrically connected to one end of a power supply 2. A composition of the raw material steel (electrode 10) is not particularly limited. The composition can be determined to correspond to a high-purity steel to obtain.

The raw material steel (electrode 10) is installed inside an ESR furnace 1 so as to be movable up and down. At the start of a production, a solid (granular at room temperature) flux 11A is spread on a lateral portion and a lower portion of the raw material steel (electrode 10). The flux 11A has the above-described composition.

The other end of the power supply 2 is electrically connected to a conductive hearth of the ESR furnace 1.

A cooling unit such as a water cooling unit may be provided on a furnace wall of the ESR furnace 1 (not shown in Fig. 1).

In Fig. 1, the ESR furnace 1 is shown in an open form, but the smelting of the raw material steel may be performed in a closed ESR furnace in which an atmosphere is adjusted.

In the production of the high-purity steel, an electric current is passed from the power supply 2 to energize the electrode 10 and the flux 11A. Accordingly, the flux 11A and a tip of the electrode 10 are melted by joule heating. The flux 11A is melted into a slag 11. Furthermore, a metal melted from the tip of the electrode 10 descends in the slag 11. In this case, impurities (such as a sulfur atom) in the metal are incorporated into the slag 11, and the raw material steel is refined. A descended metal forms a molten pool 12 below the slag 11. Moreover, the melt is gradually cooled to produce a high-purity steel (an ingot 13) (hereinabove, see Fig. 2).

In Fig. 2, a liquid level of the slag 11 gradually moves upward as the ingot 13 and the molten pool 12 are formed. Therefore, the electrode 10 is appropriately moved accordingly, and remelting of the electrode 10 is continuously performed.

From the above, the high-purity steel can be obtained.

Although the embodiments of the present invention have been described above, these are examples of the present invention, and various configurations other than the above can be adopted. In addition, the present invention is not limited to the embodiment, and modifications, improvements, and the like within the range in which an object of the present invention can be achieved are included in the present invention.

### [Examples]

In table 1, Examples 1-3 are inventive examples. The present invention is not limited to Examples.

### <Example 1: Production of flux>

First, the following CaF₂ and Al₂O₃ were prepared. A "particle size" was measured using a sieve for JIS test.
- CaF₂: Compounding ratio of 70% by mass, purity of equal to or higher than 98% by mass, and particle size of equal to or less than 3 mm
- Al₂O₃: Compounding ratio of 30% by mass, purity of equal to or higher than 99% by mass, and particle size of equal to or less than 1 mm

Here, CaF₂ contained a small amount of MgO, SiO₂, and the like.

The raw materials were mixed with a gravity mixer to obtain a substantially uniform mixture.

Thereafter, the mixture was put into a three-phase arc furnace and heated to be equal to or higher than 1600°C under conditions of a current value of 3.0 to 3.5 kA and a voltage value of 150 to 200 V to melt the mixture to obtain a molten mixture. The melting time at this time was set to 3 hours.

After cooling, the obtained molten mixture was pulverized with a hammer mill and appropriately sieved to obtain a granular flux.

The obtained flux was XRD-analyzed using a device "D8 ADVANCE" manufactured by BRUKER, and then analyzed using analysis software "TOPAS" manufactured by BRUKER. As a result, a content proportion of each crystal phase of CaF₂, Al₂O₃, CaO·6Al₂O₃, and CaO in the entirety of the crystal phases in the flux was determined.

In the analysis, a literature value was used as a reference value for 20 of each crystal phase.

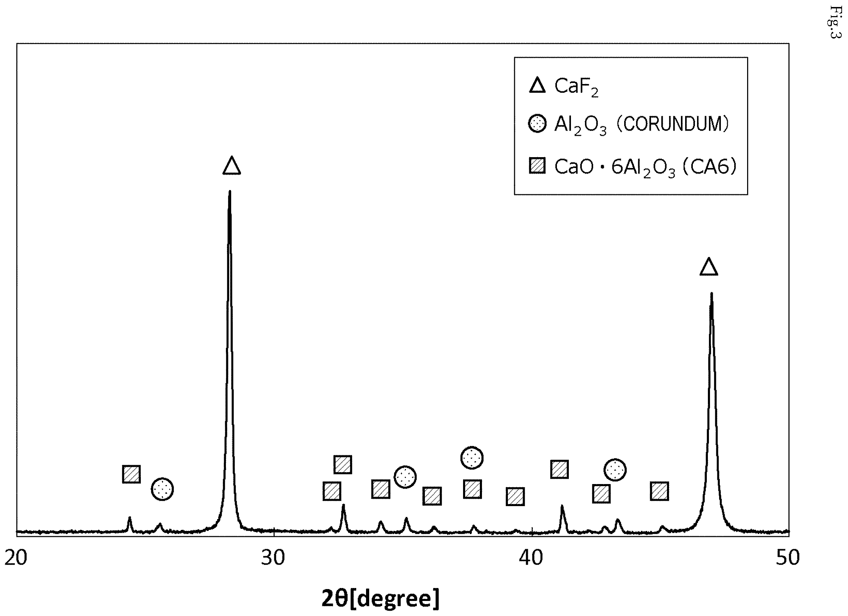

For the reference, an XRD chart of the flux of Example 1 is shown in Fig. 3.

In addition, the content proportion of the CaO component in the flux, the content proportion of the MgO component in the flux, and the content proportion of the SiO₂ component in the flux were determined by a fluorescent X-ray analysis method (XRF) .

Specifically, first, peaks of Ca, Mg, and Si were obtained using a scanning fluorescent X-ray analyzer (ZSX Primus II) manufactured by Rigaku Corporation as an analyzer.

Next, for Mg and Si, intensities of the obtained peaks were applied to a calibration curve prepared in advance by a chemical analysis to determine the amounts of MgO and SiO₂. In this case, it was assumed that all of Mg and Si detected by XRF existed in the form of MgO and SiO₂, respectively.

On the other hand, regarding Ca, all Ca was detected as CaO bonded to oxygen atoms by the fluorescent X-ray analysis method, and Ca in CaF₂ is also regarded as CaO. Therefore, CaO is also measured by an ion electrode method and the content proportion of the CaO component was determined.

Specifically, first, water vapor HF from CaF₂ in and flux were generated, and the HF was taken into water to obtain an HF aqueous solution. The amount of fluorine in the aqueous solution was measured by the ion electrode method, and a measured value was converted into the CaF₂ content proportion in the flux.

Then, the content proportion of the CaF₂ component in the flux obtained above was cut from the content proportion of the CaO component detected by the fluorescent X-ray analysis method to determine the content proportion of the CaO component in the flux.

### <Examples 2 and 3>

The flux was produced by the same raw materials and production method as in Example 1. In addition, various analyzes were performed.

### <Comparative Example 1>

A flux "ESR-2029 ELH" manufactured by Wacker was prepared.

The flux is a mixed product of particles of electromelting fluorite (CaF₂) and particles of electromelting alumina (Al₂O₃), and does not substantially contain CaO·6Al₂O₃.

### <Evaluation: Melting point>

5 g of the pulverized flux was formed to have a cylinder shape with ϕ 15 mm × 10 mm by a compression forming machine. The flux was placed on a platinum sheet and set in a tube furnace. Then, a temperature inside the furnace was raised while measuring the temperature using a thermocouple, and the temperature at which the formed flux was completely melted was recorded as a melting point.

Table 1 shows a composition (analysis result) of the flux of Examples 1 to 3 and Comparative Example 1 and the evaluation result of the melting point.

Table 1 shows a ratio of each crystal phase in the entirety of the crystal phases and a ratio of each chemical component in the entirety of the flux (crystal phase + amorphous portion).

It is noted that a total ratio is not always exactly 100 mass% because each ratio is calculated based on the calibration curve.

### [Table 1]

**[Table 1]**

| | Composition [mass%] | | | | | | | | | Melting point |
|---|---|---|---|---|---|---|---|---|---|---|
| | Proportion in entirety of crystal phases | | | | Proportion in entirety of flux | | | | | |
| | CaF₂ | CaO ·6Al₂O₃ | CaO | Al₂O₃ | CaF2 | CaO | Al₂O₃ | MgO | SiO₂ | |
| Example 1 | 70.0 | 17.1 | 0.0 | 12.3 | 70.0 | 3.1 | 28.0 | 0.02 | 0.36 | 1490°C |
| Example 2 | 65.6 | 27.9 | 0.0 | 5.2 | 65.6 | 4.0 | 30.7 | 0.02 | 0.64 | 1480°C |
| Example 3 | 66.5 | 23.0 | 0.0 | 9.3 | 66.5 | 3.6 | 30.4 | 0.02 | 0.60 | 1490°C |
| Comparative Example 1 | 69.0 | 0.0 | 0.0 | 31.3 | 69.0 | 1.1 | 31.3 | 0.17 | 0.11 | 1530°C |

As shown in Table 1, the melting points of the fluxes of Examples 1 to 3, that is, fluxes including the CaF₂ crystal phase, the Al₂O₃ crystal phase, and the CaO·6Al₂O₃ crystal phase, and having a proportion of the CaO·6Al₂O₃ crystal phase of equal to or more than 10% by mass and equal to or less than 30% by mass were lower than the melting point of the flux of the Comparative Example 1.

### <Production of high-purity steel>

Using the fluxes of Examples 1 to 3, the raw material steel containing impurities such as sulfur was refined in an ESR furnace as shown in Figs. 1 and 2 to obtain an ingot. Then, it was confirmed that the amount of impurities in the obtained ingot was smaller than the amount of impurities in the raw material steel.

### REFERENCE SIGNS LIST

1: ESR furnace
2: power supply
10: electrode
11A: flux
11: slag
12: molten pool
13: ingot

## Claims

1. A flux (11A) configured to be used in an electro-slag remelting method, the flux (11A) comprising:
a CaF₂ crystal phase;
an Al₂O₃ crystal phase; and
a CaO·6Al₂O₃ crystal phase;
a MgO component;
a SiO₂ component; and
a molten mixture of a compound containing CaF₂ and a compound containing Al₂O₃;
wherein a content proportion of the CaO·6Al₂O₃ crystal phase in an entirety of the crystal phases in the flux (11A) is equal to or more than 10% by mass and equal to or less than 30% by mass,
wherein a content proportion of the CaF₂ crystal phase in the entirety of the crystal phases in the flux (11A) is equal to or more than 60% by mass and equal to or less than 80% by mass,
wherein a content proportion of the Al₂O₃ crystal phase in the entirety of the crystal phases in the flux (11A) is equal to or more than 5% by mass and equal to or less than 15% by mass,
wherein a content proportion of a CaO component in an entirety of the flux (11A) is equal to or more than 0.1% by mass and equal to or less than 7% by mass,
wherein a content proportion of the MgO component in an entirety of the flux (11A) is equal to or more than 0.005% by mass and equal to or less than 0.5% by mass,
wherein a content proportion of the SiO₂ component in an entirety of the flux (11A) is equal to or more than 0.3% by mass and equal to or less than 1.5% by mass.

2. A method for producing the flux (11A) according to claim 1, the method comprising:
a melt mixing step of melting and mixing the compound containing CaF₂ and the compound containing Al₂O₃ at equal to or higher than 1600°C.

3. A method for producing a high-purity steel, the method comprising:
a step of refining a raw material steel into a high-purity steel by remelting using an electro-slag remelting method,
wherein a melt of the flux (11A) is used as slag (11), wherein said flux (11A) is produced according to the method of claim 2.

## Patentansprüche

1. Ein Flussmittel (11A), das zur Verwendung in einem Elektroschlacke-Umschmelzverfahren konfiguriert ist, wobei das Flussmittel (11A) umfasst:
eine CaF₂-Kristallphase;
eine Al₂O₃-Kristallphase; und
eine CaO·6Al₂O₃-Kristallphase;
eine MgO-Komponente;
eine SiO₂-Komponente; und
eine geschmolzene Mischung aus einer CaF₂ enthaltenden Verbindung und einer Al₂O₃ enthaltenden Verbindung;
wobei ein Anteil der CaO·6Al₂O₃-Kristallphase an einer Gesamtheit der Kristallphasen im Flussmittel (11A) gleich oder mehr als 10 Massenprozent und gleich oder weniger als 30 Massenprozent beträgt,
wobei ein Anteil der CaF₂-Kristallphase an der Gesamtheit der Kristallphasen im Flussmittel (11A) gleich oder mehr als 60 Massenprozent und gleich oder weniger als 80 Massenprozent beträgt,
wobei ein Anteil der Al₂O₃-Kristallphase an der Gesamtheit der Kristallphasen im Flussmittel (11A) gleich oder mehr als 5 Massenprozent und gleich oder weniger als 15 Massenprozent beträgt,
wobei ein Anteil einer CaO-Komponente in einer Gesamtheit des Flussmittels (11A) gleich oder mehr als 0,1 Massenprozent und gleich oder weniger als 7 Massenprozent beträgt,
wobei ein Anteil der MgO-Komponente in einer Gesamtheit des Flussmittels (11A) gleich oder mehr als 0,005 Massenprozent und gleich oder weniger als 0,5 Massenprozent beträgt,
wobei ein Anteil der SiO₂-Komponente in einer Gesamtheit des Flussmittels (11A) gleich oder mehr als 0,3 Massenprozent und gleich oder weniger als 1,5 Massenprozent beträgt.

2. Verfahren zur Herstellung des Flussmittels (11A) nach Anspruch 1, wobei das Verfahren umfasst:
einen Schmelzmischschritt des Schmelzens und Mischens der CaF₂ enthaltenden Verbindung und der Al₂O₃ enthaltenden Verbindung bei 1600°C oder mehr.

3. Verfahren zur Herstellung eines hochreinen Stahls, wobei das Verfahren umfasst:
einen Schritt des Raffinierens eines Rohstahls in einen hochreinen Stahl durch Umschmelzen unter Verwendung eines Elektroschlacke-Umschmelzverfahrens,
wobei eine Schmelze des Flussmittels (11A) als Schlacke (11) verwendet wird, wobei das Flussmittel (11A) gemäß dem Verfahren nach Anspruch 2 hergestellt wird.

## Revendications

1. Flux (11A) configuré pour être utilisé dans un procédé de refusion sous laitier électroconducteur, le flux (11A) comprenant :
une phase cristalline CaF₂ ;
une phase cristalline Al₂O₃ ; et
une phase cristalline CaO·6Al₂O₃ ;
un composé MgO ;
un composé SiO₂ ; et
un mélange fondu d'un composé contenant CaF₂ et d'un composé contenant Al₂O₃ ;
dans lequel la proportion de la teneur de la phase cristalline CaO·6Al₂O₃ dans une totalité des phases cristallines du flux (11A) est égale ou supérieure à 10 % en masse et égale ou inférieure à 30 % en masse,
dans lequel une proportion de la teneur de la phase cristalline CaF₂ dans la totalité des phases cristallines dans le flux (11A) est égale ou supérieure à 60% en masse et égale ou inférieure à 80% en masse,
dans lequel une proportion de la teneur de la phase cristalline Al₂O₃ dans la totalité des phases cristallines dans le flux (11A) est égale ou supérieure à 5% en masse et égale ou inférieure à 15% en masse,
dans lequel une proportion de la teneur d'un composé CaO dans une totalité du flux (11A) est égale ou supérieure à 0,1% en masse et égale ou inférieure à 7% en masse,
dans lequel une proportion de la teneur du composé MgO dans une totalité du flux (11A) est égale ou supérieure à 0,005% en masse et égale ou inférieure à 0,5% en masse,
dans lequel une proportion de la teneur du composé SiO₂ dans une totalité du flux (11A) est égale ou supérieure à 0,3% en masse et égale ou inférieure à 1,5% en masse.

2. Procédé de production du flux (11A) selon la revendication 1, le procédé comprenant :
une étape de mélange en fusion consistant à faire fondre et à mélanger le composé contenant CaF₂ et le composé contenant Al₂O₃ à une température égale ou supérieure à 1600°C.

3. Procédé de production d'un acier de haute pureté, le procédé comprenant :
une étape d'affinage d'un acier brut en un acier de haute pureté par refusion en utilisant un procédé de refusion sous laitier électroconducteure,
dans lequel une masse fondue du flux (11A) est utilisée comme laitier (11), dans lequel ledit flux (11A) est produit selon le procédé de la revendication 2.
